# EUROPEAN PATENT APPLICATION

(11) **EP 1 764 743 A2**
(43) Date of publication of application: **21.03.2007**
(21) Application number: 06254813.6
(22) Date of filing: 15.09.2006
(51) Int. Cl.: G06T 11/60

(54) **Image display device, image display method, computer program product, and image display system**

(30) Priority: 16.09.2005 JP 2005269306; 18.07.2006 JP 2006196221
(71) Applicant: Ricoh Company, Ltd., Tokyo 143-8555 (JP)
(72) Inventor: Lu, Bin, Tokyo 143-8555 (JP); Sakayori, Tetsuya, Tokyo 143-8555 (JP); Takami, Junichi, Tokyo 143-8555 (JP); Saeki, Iwao, Tokyo 143-8555 (JP); Kato, Yoshinaga, Tokyo 143-8555 (JP); Sakuramata, Yoshifumi, Tokyo 143-8555 (JP); Yano, Takashi, Tokyo 143-8555 (JP); Mano, Hiroko, Tokyo 143-8555 (JP)
(74) Representative: Mounteney, Simon James

(57) **Abstract**

The image display device (10) includes a display control unit (16) that cause a display unit (3) to display an original image, a divided non-edited image, and an divided edited image. A dividing unit (12) divides the original image data into at least one of a block, of which image data is edited by an editing unit (14). The display control unit (16) causes the display unit (3) to display the edited image and the non-edited image side by side on the display unit (3).

## Description

### BACKGROUND OF THE INVENTION

### 1. Field of the Invention

The present invention relates generally to an image display device, an image display method, a computer program product, and an image display system, and, more particularly, to an image display device and an image display method that carry out image editing on an electronic device having an operation display unit, a computer program product, and an image display system.

### 2. Description of the Related Art

An image forming device such as a digital compound machine, which is a kind of multi-functioning printer, has an extremely narrow touch panel for making operational setting or displaying a condition of an output manuscript. Such a touch panel offers by no means fine operability.

In carrying out setting or display operation on a touch panel of an image forming device, a user makes setting by checking an order of arrangement of contents in a printed state while observing contents of each image component on the touch panel. This kind of operation is difficult to carry out because the size of the touch panel is limited due to a designing.

To solve this problem, following technique has been devised. According to the technique, an image forming device reads an image by a scanner and displays an area selection screen on the touch panel, and receives a selection of an image area by a user out of a character area, a photograph area, a graphic area, and a background area, which are shown on the screen mutually separable. When the user presses an area selection key, the image forming device displays a screen specifying adjustment contents for density, color balance, etc. for each selected image area, and adjusts the density and color balance according to the specified adjustment contents to form an image (Japanese Patent Application Laid-Open No. 2002-112022).

According to the technique disclosed in Japanese Patent Application Laid-Open No. 2002-112022, a setting screen showing adjustment contents for image areas is displayed to put out a selection menu. The technique is, therefore, is convenient in carrying out setting operation by displaying a setting menu.

Offering a convenience for setting operation on a touch panel screen, however, the technique disclosed in Japanese Patent Application Laid-Open No. 2002-112022 does not enable the image forming device to display how a finished image after having set would actually be put out. This raises a problem that the arrangement or condition of a printed image to be actually finished printing cannot be known before printing. When editing setting of magnification, demagnification, deletion, rearrangement, etc. is made on image components included in an image, a user remains not having recognized an editing result reflected on the image, thus cannot know whether or how image component arrangement has been changed, how the order of arrangement of each image component has been changed, etc. This may result in a failure in obtaining a desired output result, leading to useless printing work.

### SUMMARY OF THE INVENTION

It is an object of the present invention to at least partially solve the problems in the conventional technology.

According to an aspect of the present invention, an image display device includes a display unit that displays an image; a display control unit that divides an original image data into at least one block and causes the display unit to display a non-edited image of a portion of the original image corresponding to an image data of the block; a receiving unit that receives an editing setting corresponding to the non-edited image; and an editing unit that edits the image data of the block based on the editing setting to obtain an edited image data, wherein the display control unit causes the display unit to display an edited image corresponding to the edited image data side by side of the non-edited image.

According to another aspect of the present invention, an image display method includes dividing an original image data into at least one block; displaying a non-edited image of the block on a display unit; receiving an editing setting via the non-edited image displayed on the display unit; editing the image data of the block based on the editing setting to obtain an edited image data; and displaying an edited image corresponding to the edited image data, the edited image and the non-edited image being displayed side by side on the display unit.

According to still another aspect of the present invention, a computer program product includes a computer program that implements the above method on a computer.

According to more over aspect of the present invention, an image display system includes a display device that displays an original image; an image output device that outputs an image; and an image processor that causes the display device to display the image, and causes the output device to output the image, in which the display device, the image output device and the image processor are interconnected via a network, the image processor including a display control unit that divides the original image data into at least one block and causes the display device to display a non-edited image of a portion of the original image corresponding to an image data of the block; a receiving unit that receives an editing setting corresponding to the non-edited image; and an editing unit that edits the image data of the block based on the editing setting to obtain an edited image data, wherein the display control unit causes the display unit to display an edited image corresponding to the edited image data side by side of the non-edited image.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of an image forming device including an image display device according to a first embodiment of the present invention;
Fig. 2 is a schematic view for explaining a pre-editing image and a post-edited image displayed on a touch panel;
Fig. 3 is a schematic view for explaining an example of a pre-editing image and a post-edited image displayed on the touch panel;
Fig. 4 is a schematic view for explaining another example of a pre-editing image and a post-edited image displayed on the touch panel;
Fig. 5 is a flowchart for explaining an image display procedure according to the first embodiment;
Fig. 6 is a schematic view for explaining one example of display by an image display device according to a second embodiment of the present invention;
Fig. 7 is a flowchart for explaining an image display procedure according to the second embodiment;
Fig. 8 is a schematic view for explaining pre-editing and post-edited screen displayed by an image display device according to a third embodiment of the present invention;
Fig. 9 is another schematic view for explaining pre-editing and post-edited screen displayed by the image display device according to the third embodiment;
Fig. 10 is a flowchart for explaining an image display procedure according to the third embodiment;
Fig. 11 is a block diagram of an image forming device including an image display device according to a fourth embodiment of the present invention;
Fig. 12 is a schematic view of one example of a post-edited image displayed by the image display device according to the fourth embodiment;
Fig. 13 is a flowchart for explaining an image display procedure according to the fourth embodiment;
Fig. 14 is a block diagram of an image forming device including an image display device according to a fifth embodiment of the present invention;
Fig. 15 is schematic view for explaining one example of display by the image display device according to the fifth embodiment;
Fig. 16 is a flowchart for explaining an image display procedure according to the fifth embodiment;
Fig. 17 is a schematic view for explaining one example of display by an image display device according to a sixth embodiment of the present invention;
Fig. 18 is a flowchart for explaining an image display procedure according to the sixth embodiment;
Fig. 19 is a block diagram of the hardware configuration of the image forming device according to the embodiments;
Fig. 20 is a schematic view of another example of a display screen displayed on the touch panel of the image display device;
Fig. 21 is a block diagram of a PC according to a seventh embodiment of the present invention;
Fig. 22 is a flowchart for explaining an image process procedure according to the seventh embodiment;
Fig. 23 is a schematic view of one example of a display screen displayed on the monitor of the PC; and
Fig. 24 is a block diagram of an image display system according to an eighth embodiment of the present invention.

### DETAILED DESCRIPTION OF THE PREFERRED EMBODIMENTS

Exemplary embodiments of the present invention will now be described in detail with reference to the accompanying drawings.

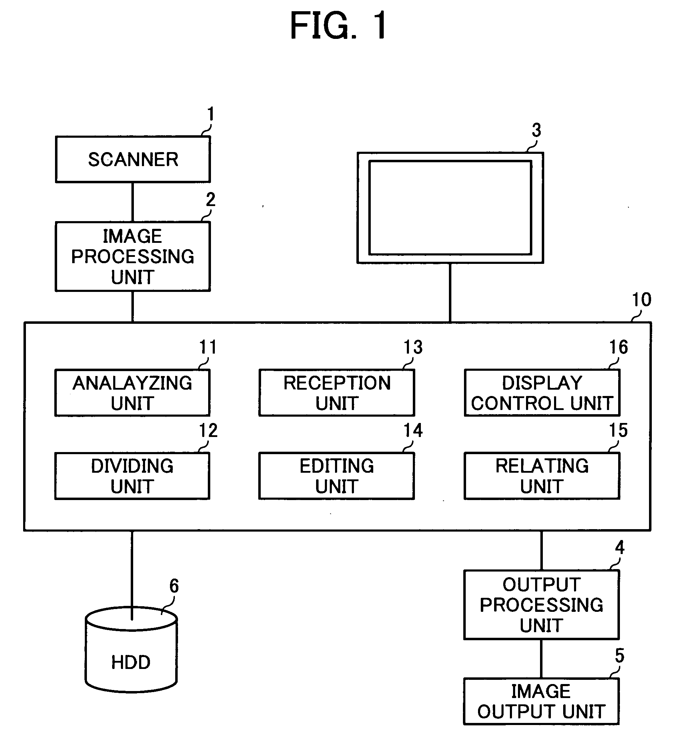

Fig. 1 is a block diagram of an image forming device including an image display device according to a first embodiment of the present invention. The image forming device includes a scanner 1, an image processing unit 2, a touch panel 3, an output processing unit 4, an image output unit 5, a memory (HDD) 6, and an image display device 10. The scanner 1 reads a manuscript image. The image processing unit 2 converts the read manuscript image into digital data to generate image data, and sends the generated image data to the image display device 10.

The touch panel 3 receives input of various setting, including editing setting and print setting, which is made by a user. The touch panel 3 receives input made by contact with the touch panel 3 via a person's finger, a stylus pen, or other contact input tools. The touch panel 3 detects input made at each place on the panel surface for display by a known technique of a resistance film method of detecting a change in resistance in response to a press by a finger tip or a pen point, an analog capacity coupling method, etc. The following description will be made about embodiments employing contact input (hereinafter "touch input"), which is a type of input carried out by making contact with the touch panel 3. Touch input, however, is not the only input style employed in the embodiments of the present invention. Various input styles, which include input styles using a mouse, keyboard, etc., can apply to the embodiments.

The image display device 10 executes a setting process on image data sent from the image processing unit 2 to the image display device 10 on the basis of various setting input from the touch panel 3, and sends post-edited image data in a print-out form to the output processing unit 4. The output processing unit 4 executes an output process on the post-edited image data sent from the image display device 10, and sends the processed post-edited image data to the image output unit 5. The image output unit 5 prints out on the basis of received image data.

The touch panel 3 displays in a row a pre-editing image, which is a read image data, and a post-edited image, which has been subjected to an editing process by the image display device 10 to be in a print-out form.

According to the first embodiment of the present invention, a read image and a post-edited image, which has been subjected to an editing process by the image display device 10 of the image forming device and is to be printed out, are displayed in a row on the touch panel 3. The embodiment, therefore, can be applied to an image forming device generally not provided with a wider screen or, in a broader application, to an electronic device having a touch panel to display an original image and an output image in a row in an easily recognizable manner.

The image display device 10 according to the first embodiment includes an analyzing unit 11, a dividing unit 12, a reception unit 13, an editing unit 14, a relating unit 15, and a display control unit 16.

The analyzing unit 11 analyzes input image data to determine its image type to be any one out of a character image, photographic image, graphic image, and other image. Since this analytical method is a known technique, the detailed description of the method will be omitted.

In the analyzing process, an image containing overlapping character and photographic images, an image containing overlapping photographic and graphic images, etc. can be handled as other type of images. In addition, a character/photographic image can be handled as one image type in the image type analysis. In other words, the analyzing process may be carried out by assuming an additional image type other than a character image, photographic image, and graphic image. Accordingly, a combination of any two or more image types of character image, photographic image, or graphic image may be handled as one image type in the analyzing process.

The dividing unit 12 divides image data on the basis of an analysis result given by the analyzing unit 11. The dividing unit 12 divides the image data, for example, into each paragraph if the image data consists of sentences, and into photograph image and graphic image if the image data consists of photograph images and graphic images (block) respectively.

In this dividing process, for example, the division of a character image is carried out when an area containing a series of portions judged to be characters is judged to be the character image. The division of a photographic image is carried out when a photographic image area is detected by detection of continuous middle-tone pixels. The division of a graphic image is carried out when a graphic image area is detected by detection of edges and an intense difference between light and shade. In other cases, where an image type is judged to be other than a character image, photographic image, and a graphic image, another division process is carried out accordingly. Since this dividing process (into blocks) is a known technique, the detailed description of the process will be omitted.

The reception unit 13 receives an input signal asking for an editing process that is input by a user via the touch panel 3, and sends the input signal to the editing unit 14. The editing unit 14 executes an editing process on input image data according to an editing process item sent to the editing unit 14. When no editing process requirement is received for the initially read image data, the editing unit 14 sends the image data not having undergone the editing process directly to the display control unit 16.

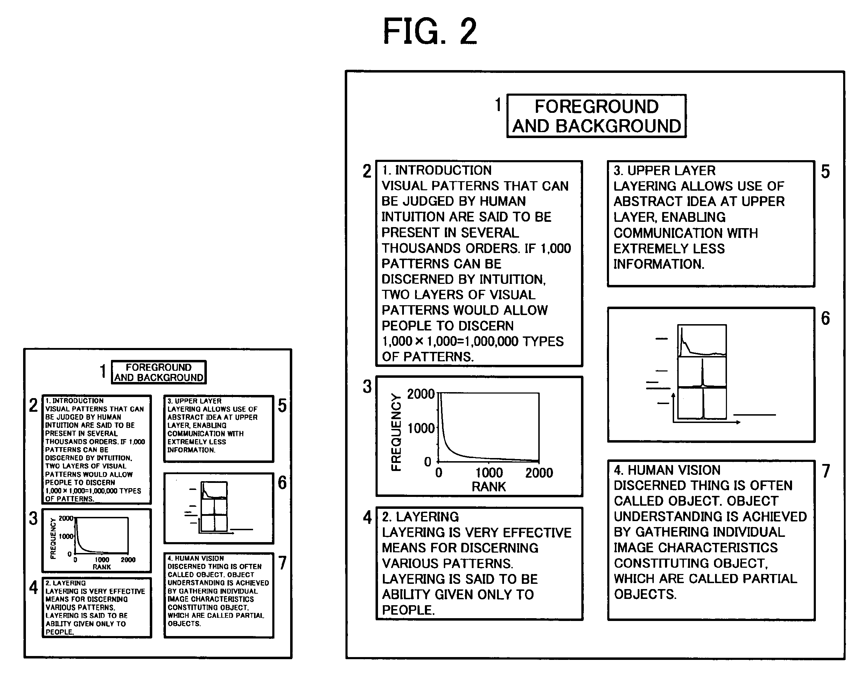

Fig. 2 is a schematic view for explaining a pre-editing image and a post-edited image displayed on a touch panel. In this case, the pre-editing image is not subjected to an editing process. The post-edited image is, therefore, the same as the pre-editing image.

At first, read image data and the initial image data receiving no editing process are displayed in a row on the touch panel 3, where the initial image data is displayed as an image ready for output. For convenience in this description, the displayed image ready for output is called post-edited image. When a user makes input asking for editing, the image ready for output changes, and the changed image becomes ready also for output and the read image are displayed in a row on the touch panel 3.

The relating unit 15 relates the divided areas of read image data, which are divided by the dividing unit 12, in correspondence to the divided areas of the image data that having undergone an editing process. At the initial data reading, a post-edited image is equivalent to the initially read image, so that the divided areas of the initially read image actually correspond to that of the initially read image itself.

The display control unit 16 processes image data from the editing unit 14. The display control unit 16 arranges and displays numbers indicating the corresponding relation between pre-editing divided areas and post-edited divided areas, the corresponding relation being given by the relating unit 15, in vicinities of divided areas each corresponding to each numbers, as shown in Fig. 2. As shown in Fig. 2, seven divided areas are detected for the image data, and are related in correspondence between the pre-editing image data and the post-edited image data.

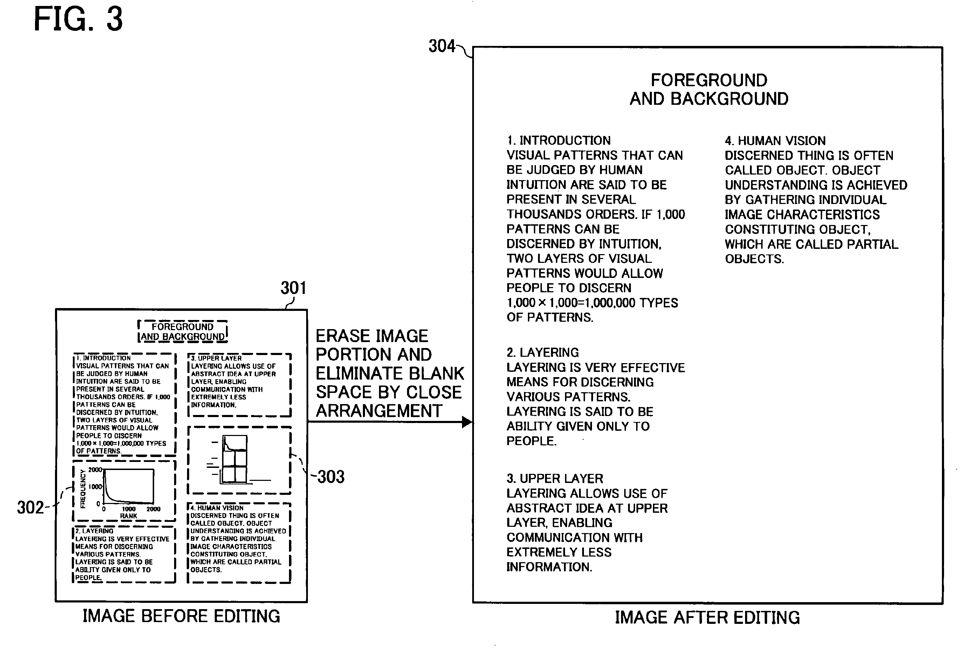

Fig. 3 is a schematic view for explaining an example of a pre-editing image and a post-edited image displayed on the touch panel. In this case, a user has made deletion setting on two image components 302 and 303 of a pre-editing image 301 through an operation on the touch panel 3. This kind of setting can be made via a pull-down menu developed on the touch panel 3 or by touch input on the touch panel 3.

The reception unit 13 receiving the deletion setting from the touch panel 3 sends a request signal to the editing unit 14. The editing unit 14 erases two image components, which are the areas related in correspondence to the image components 302 and 303 by the relating unit 15, from post-edited image data to generate new post-edited image data. The editing unit 14 then eliminates spaces formed by the deletion process through close arrangement of image components, and generates image data resulting from an editing process of rearranging the image components consisting of characters.

In the pre-editing image 301, each area encircled with a dotted line frame represents one image type (also called image component). A document title, a paragraph, and a diagram, therefore, each represents an image component.

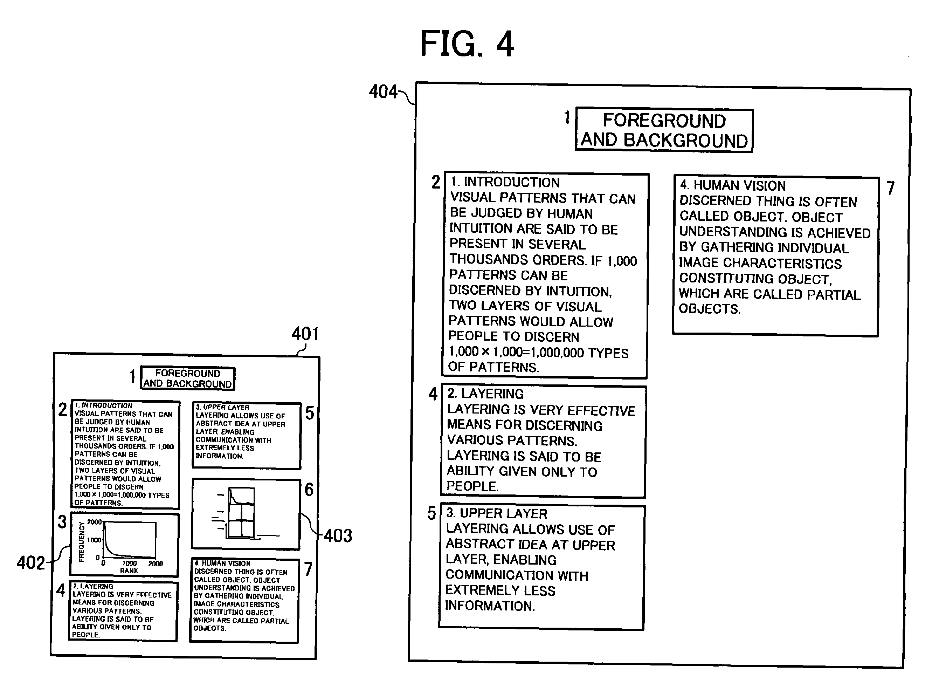

Fig. 4 is a schematic view for explaining another example of a pre-editing image and a post-edited image displayed on the touch panel 3. In Fig. 4, the pre-editing image in a demagnified form is displayed at the left of the post-edited image in a row. An identification number, which is identification information, is assigned to individual image component. In this case, each image component included in the pre-editing and post-edited images is encircled with a frame, and each identification number is displayed by the side of the frame. A divided area 402 having an identification number 3 and a divided area 403 having an identification number 6 in Fig. 4, both are image components, have been erased, and are not displayed on the post-edited image at the right.

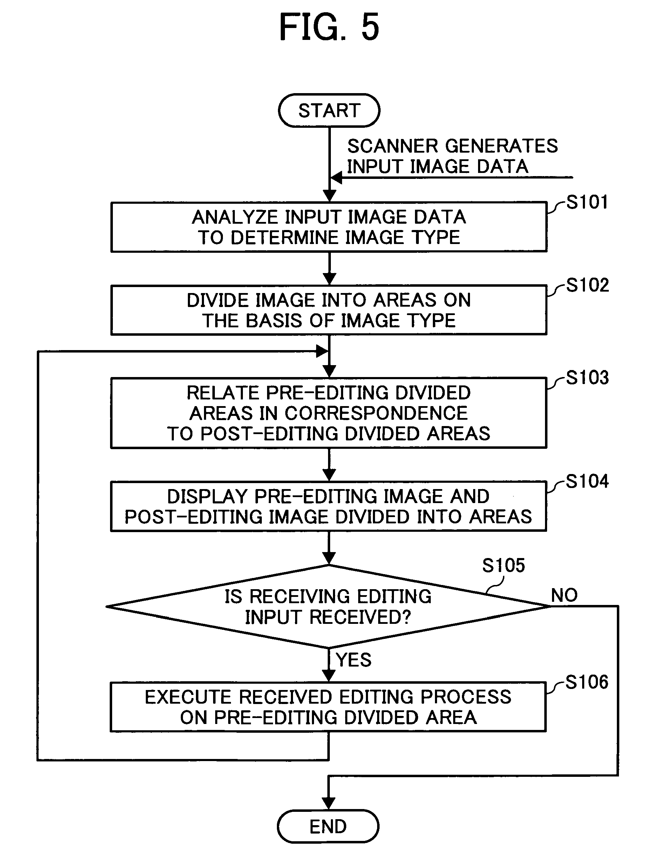

Fig. 5 is a flowchart for explaining an image display procedure according to the first embodiment. Image data read by the scanner 1 and generated by the image processing unit 2 is put into the analyzing unit 11, which analyzes the input image data to determine the image type of the image data (step S101).

The dividing unit 12 divides the image into areas according to the image type determined by the analysis (step S102). At first, the image is divided into the areas and is free from any editing setting, which provides a post-edited image same as the initial image. Nevertheless, the image same as the initial image is taken to be the post-edited image for convenience. The relating unit 15 relates pre-editing divided areas in correspondence to post-edited divided areas. This means that the initial image is related in correspondence to the initial image itself for convenience (step S103).

The display control unit 16 uses the initial image data as the post-edited image data because the image data is in the initial state not subjected to an image process, and displays a pre-editing image and a post-edited image, each divided into areas, in such a manner as shown in Fig. 2 (step S104).

The reception unit 13 detects reception or non-reception of editing input via the touch panel 3 (step S105). When the editing input is received, for example, input requiring an editing process of erasing the two image components 302 and 303 shown in Fig. 3 is received (Yes at step S105), the editing unit 14 executes the received editing process on the pre-editing divided areas to generate post-edited image data (step S106).

Then, the procedure flow returns to step 103, at which the relating unit 15 relates pre-editing divided areas in correspondence to post-edited divided areas (step S103). The display control unit 16 arranges the initial image and an image having undergone an editing process in a row, and displays both images, for example, in such a manner as shown in Fig. 3 (step S104). When no new editing input is received (No at step S105), the procedure flow ends at that point, and the image forming operation of the image forming device follows.

In this procedure, to execute deletion setting, an editing process item for the setting may be entered by displaying a pull-down menu to display items of "image deletion", "character deletion", "diagram deletion" etc., and by touching a displayed item on the screen. In this case, a user is able to erase a targeted image component more accurately and to see pre-editing and post-edited images arranged in a row after editing. The touch panel 3 provides easily understandable display even if the touch panel is so narrow that display on the panel is difficult to see to understand the contents of divided areas.

In this manner, an image reflecting an editing setting result and an image before editing are displayed together in a row, and identification information assigned to each image component is displayed with each image component included in a pre-editing image and a post-edited image. A user, therefore, can see the corresponding relation between each image component before and after editing and the order in the arrangement of each image component in an easily recognizable manner.

An image display device according to a second embodiment is different from the image display device according to the first embodiment in a point. The different point is that when a post-edited divided area displayed on the touch panel is touched, the pre-editing divided area corresponding to the touched post-edited divided area changes into another state of display, such as a state of highlighted display that clearly expresses the corresponding relation between the pre-editing divided area and the post-edited divided area, displayed on the touch panel. This allows a user to visually recognize the pre-editing divided area from the corresponding post-edited divided area by a simple input operation.

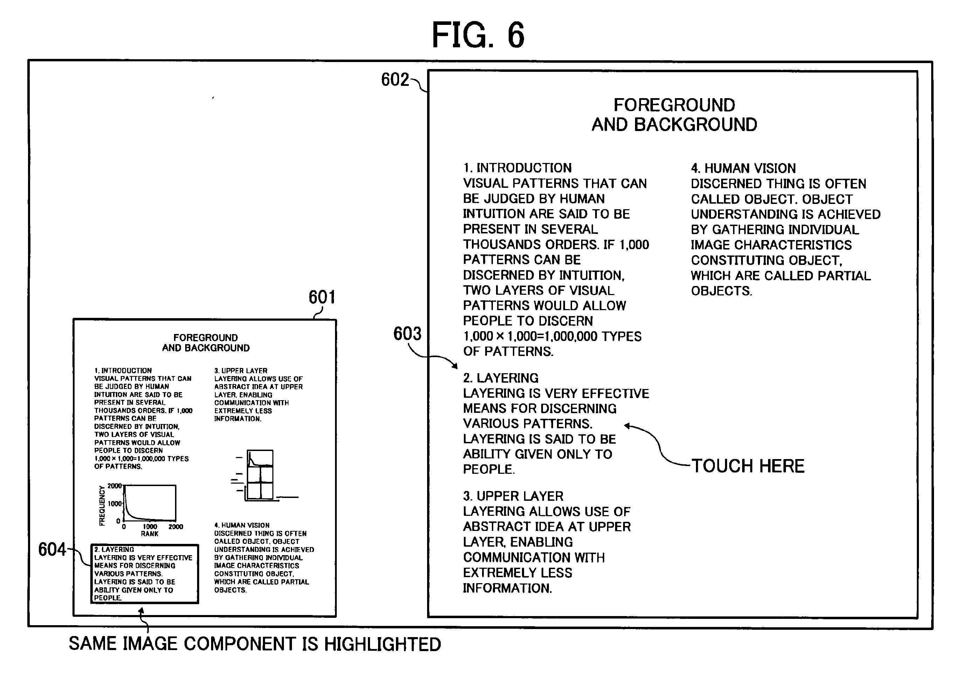

Fig. 6 is a schematic view for explaining one example of display by an image display device according to a second embodiment of the present invention. In Fig. 6, a pre-editing image 601 in a demagnified form is displayed at the left of a post-edited image 602 in a row. When an image component 603 in the post-edited image 602 is touched, an image component 604 in the pre-editing image 601 is displayed in a highlighted state, where the image component 604 is corresponding to the image component 603. In this example, the image component 604 is put in highlighted display by being framed. Besides framing, the image component 604 may also be highlighted in a display pattern of blinking, magnification, and use of a different color.

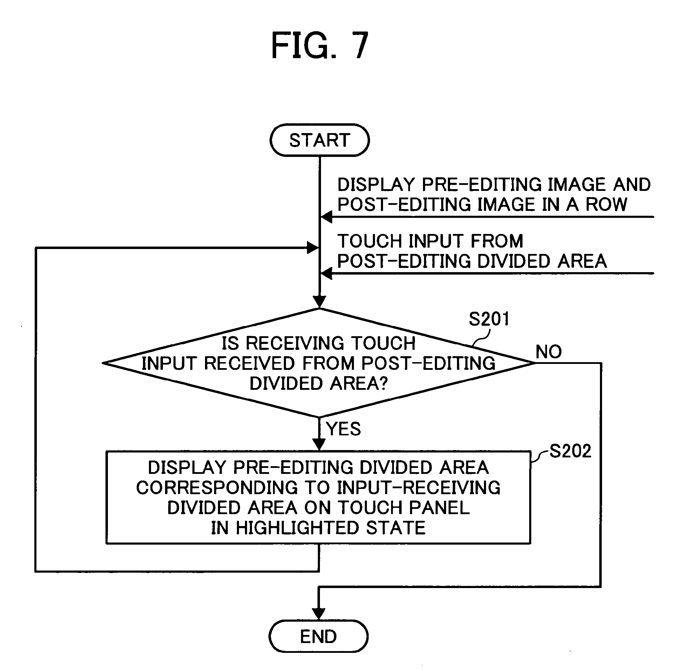

Fig. 7 is a flowchart for explaining an image display procedure according to the second embodiment. The reception unit 13 is ready for receiving input via the touch panel 3 (step S201). When the image component 603 in the post-edited image 602 is touched for input from the touch panel 3 (Yes at step S201), the editing unit 14 executes an highlighting process on the pre-editing image component 604 that is related in correspondence to the image component 603 by the relating unit 15. The highlighting process means here is an editing process of framing image data. The display control unit 16 displays pre-image-process data that has been edited by the editing unit 14 (the image component 604 in the pre-editing image 601 in Fig. 6) (step S202).

When a magnifying or demagnifying process is executed, a post-edited image may be displayed, for example, with additional highlighting element of color change. The post-edited image, therefore, may be colored in blue when magnified, or colored in red when demagnified.

As described above, a post-edited image reflecting an editing setting result and a pre-editing image are displayed together in a row, and touching an image component included in the post-edited image results in highlighted display of the image component in the pre-editing image that corresponds to the touched image component. This enables display allowing easy visual recognition of the arrangement or the order in arrangement of each image component after an editing process, even if the display is made on a display screen of a limited size, for example, on a touch panel when each image component included in an image is subjected to the editing process of deletion, rearrangement, etc.

An image display device according to a third embodiment is different from the image display device according to the first embodiment in a point. The different point is that when a pre-editing divided area displayed on the touch panel is touched, the post-edited divided area corresponding to the touched pre-editing divided area changes into another state of display, such as a state of highlighted display that clearly expresses the corresponding relation between the post-edited divided area and the pre-editing divided area, on the touch panel. When a deletion process is executed to erase a pre-editing divided area in a pre-editing image, thus no post-edited divided area corresponding to the erased pre-editing divided area presents, information giving a warning on the absence of the corresponding post-edited divided area is displayed.

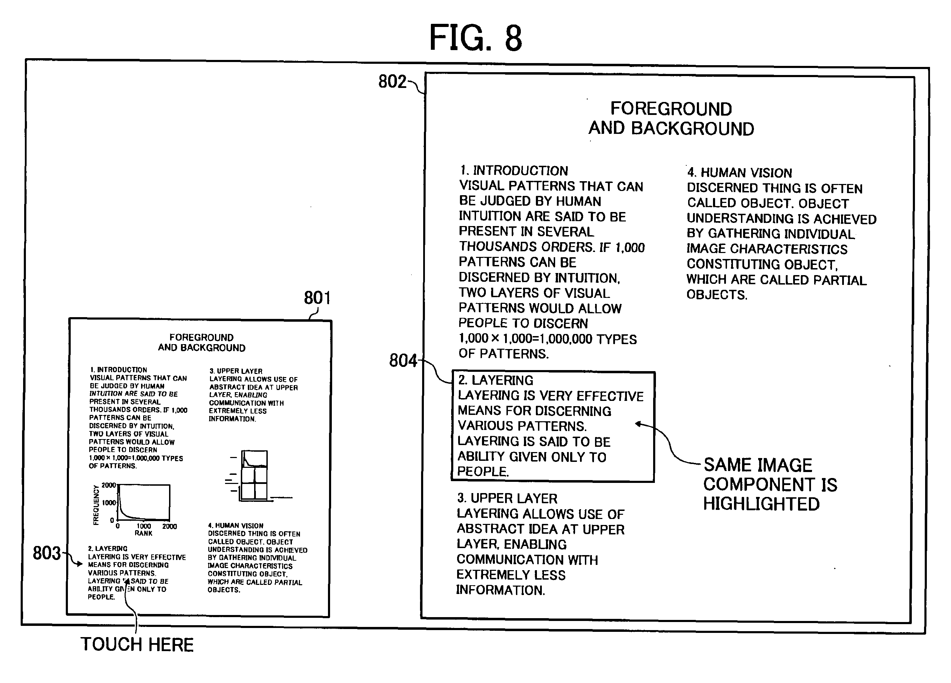

Fig. 8 is a schematic view for explaining pre-editing and post-edited screen displayed by an image display device according to a third embodiment of the present invention. In Fig. 8, a pre-editing image 801 in a demagnified form is displayed at the left of a post-edited image 802 in a row. When an image component 803 in the pre-editing image 801 displayed on the touch panel 3 is touched, as shown in Fig. 8, the reception unit 13 receives touch input. Based on the received input, the editing unit 14 executes an editing process of highlighting a post-edited image component 804 shown in Fig. 8, which is a process to execute when the post-edited image component corresponding to the image component 803 presents.

The display control unit 16 displays the post-edited divided area in a highlighted state on the basis of image data edited by the highlighting process by the editing unit 14. In this example, an image component as the highlighted post-edited divided area is framed. The post-edited image component corresponding to the pre-editing image component may be highlighted in a state of display other than framing, such as blinking, magnification, and different color.

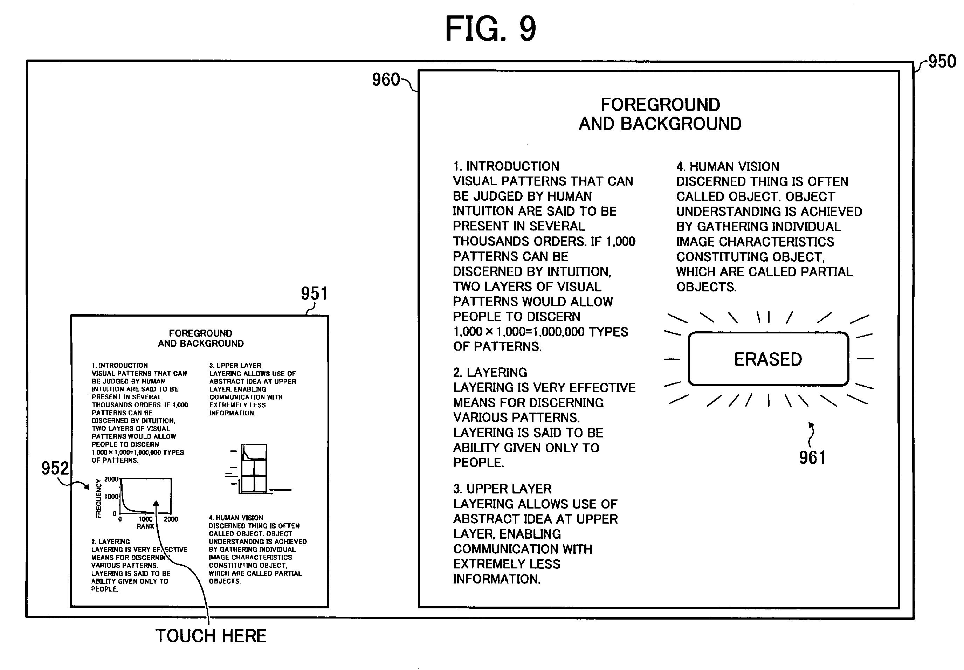

Fig. 9 is another schematic view for explaining pre-editing and post-edited screen displayed by the image display device according to the third embodiment. When a pre-editing divided area 952 displayed on the touch panel 3 is touched, the display control unit 16 detects the deletion of the post-edited divided area corresponding to the touched pre-editing divided area 952, when the corresponding post-edited divided area has been already erased by an erasing process. The display control unit 16, therefore, displays deletion information 961, which clearly indicates the deletion of the corresponding divided area, on a post-edited image 906 displayed on the touch panel 3. The information indicating the deletion is shown being displayed by superior visual recognition of blinking, changing color, highlighting, etc.

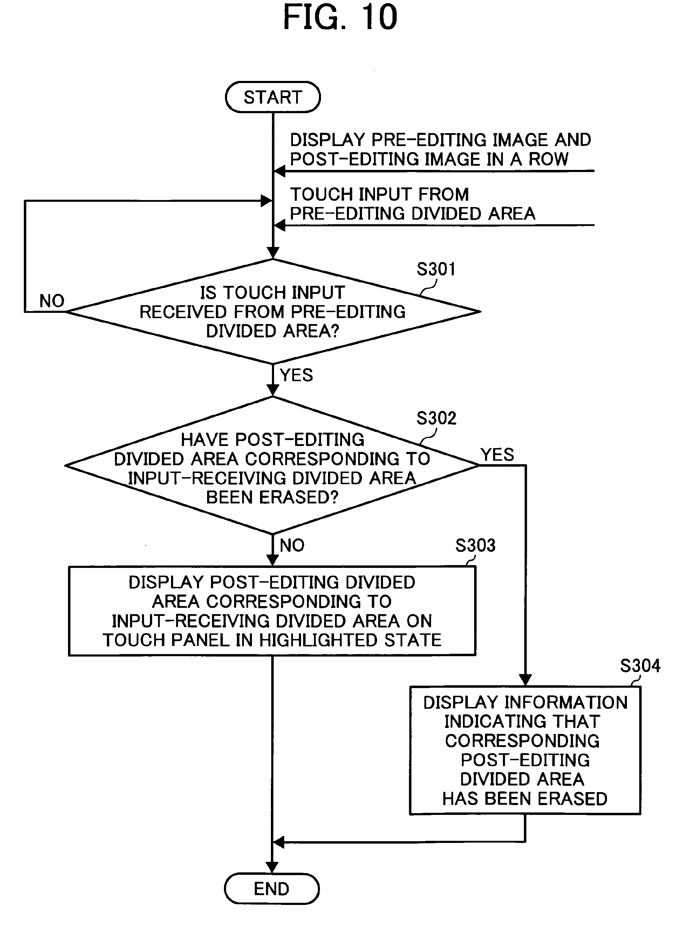

Fig. 10 is a flowchart for explaining an image display procedure according to the third embodiment. A pre-editing image and a post-edited image are displayed in a row on the touch panel 3, and a user touches a pre-editing divided area to make touch input. The reception unit 13 detects reception or non-reception of touch input from the pre-editing divided area (step S301). Upon detecting reception of the touch input (Yes at step S301), the display control unit 16 judges on whether the post-edited divided area in the post-edited image that corresponding to the touched pre-editing divided area has been erased (step S302). When judging that the corresponding post-edited divided area has not been erased (No at step S302), the display control unit 16 displays the post-edited divided area corresponding to the input-receiving divided area in a highlighted state on the touch panel 3 (step S303).

When judging that the post-edited divided area corresponding to the input-receiving divided area has been erased (Yes at step S302), the display control unit 16 makes the display indicate that the corresponding post-edited divided area has been erased (step S304).

As described above, an image reflecting an executed editing process and an image before undergoing the editing process are displayed together in a row. In this state, when an image component included in the pre-editing image is touched, the image component in the post-edited image that corresponds to the touched image component is displayed in a highlighted state when the corresponding image component is present, while information indicating the absence of the corresponding image component is displayed when the corresponding image component is not present. In this manner, the image display device displays the corresponding relation between each image component, and also displays warning information clearly indicating the deletion of an image component when the image component has been erased by the editing process. This enables a user to see an image reflecting the finished state of a manuscript and the original manuscript image in an easily visually recognizable manner.

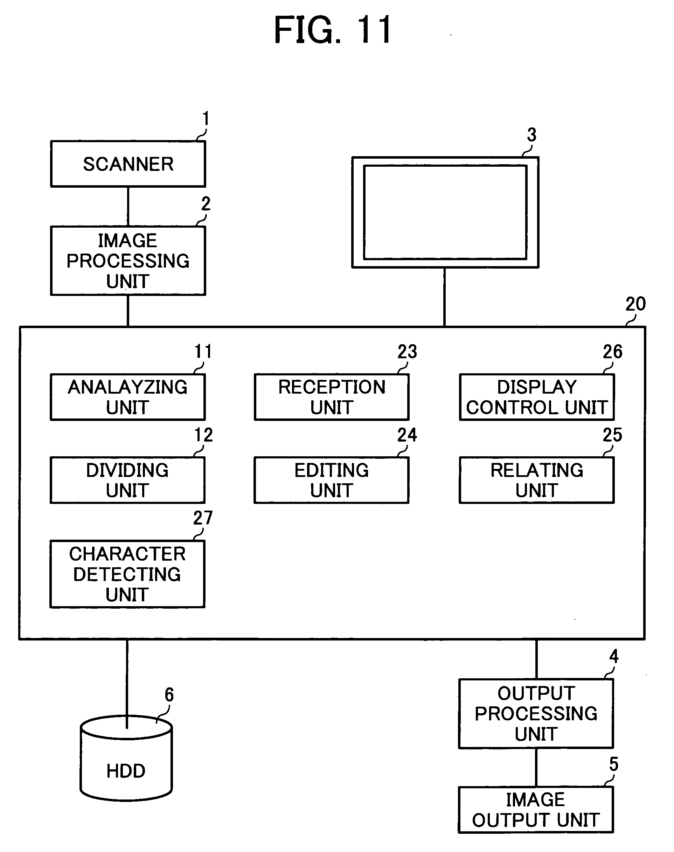

Fig. 11 is a block diagram of an image forming device including an image display device according to a fourth embodiment of the present invention. The image display device 20 of the fourth embodiment is different from the image display device of the first embodiment in the point that the image display device 20 is further provided with a character detecting unit 27, in addition to the components included in the image display device of the first embodiment.

The character detecting unit 27 detects a character image from input image data, and detects a given character image in a pre-editing divided area. A relating unit 25 executes a relating process on the detected given character image, and an editing unit 24 generates display image data displayed in a highlighted state, etc. A display control unit 26 displays the detected given character image in a highlighted state, etc., in a post-edited divided area displayed on the touch panel 3.

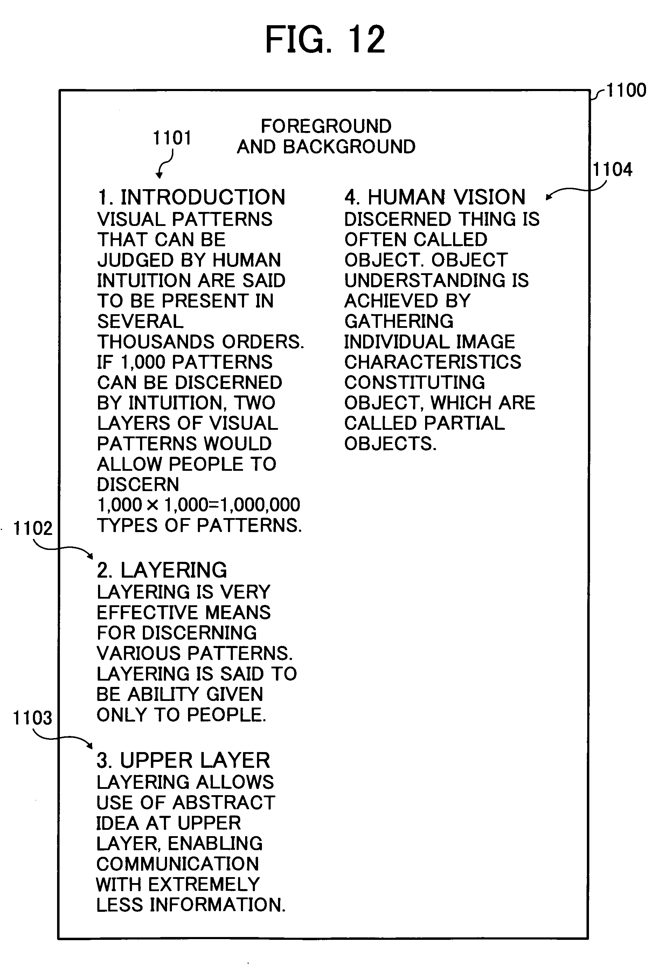

Fig. 12 is a schematic view of one example of a post-edited image displayed by the image display device according to the fourth embodiment. In Fig. 12, each string of head characters 1101 to 1104, which represents a heading, is displayed in a magnified form in each image component in a post-edited image 1100.

On the touch panel 3, for example, setting by a pull-down menu is arranged, and a user develops the menu to specify the magnification of a character image as editing setting. Specifically, the user makes setting for magnifying and displaying the character image representing the heading by touch input in each divided area consisting of a character image. A reception unit 23 receives the magnification setting, and the editing unit 24 magnifies the character image representing the heading, and the display control unit 26 displays the heading in a magnified state on the touch panel 3 on the basis of the character image data magnified by the editing unit 24 (head characters 1101 to 1104 in the post-edited image 1100 shown in Fig. 12).

In another operational constitution for clear indication of the corresponding relation between a pre-editing image and a post-edited image, a given number of characters starting a paragraph in each divided area may be displayed in a highlighted state. This is because the recognition of the initial characters of paragraphs helps understanding of the arrangement of a post-edited image.

The character detecting unit 27 detects a frequent character string, which appears in a character image highly frequently. This allows another operational constitution that a frequent character string in a pre-editing divided area and the same in a post-edited divided area are related in correspondence to each other, and that only the frequent character image in the post-edited divided area is displayed in a magnified state. This is because the frequent character string facilitates understanding of the structure of a displayed post-edited image.

The character detecting unit also detects a chapter structure consisting of sentences, and selects a character string, such as a title indicating the chapter structure, to allow an operational constitution that the selected character string is displayed in a highlighted state. This is because such a highlighted title facilitates understanding of the overall character image.

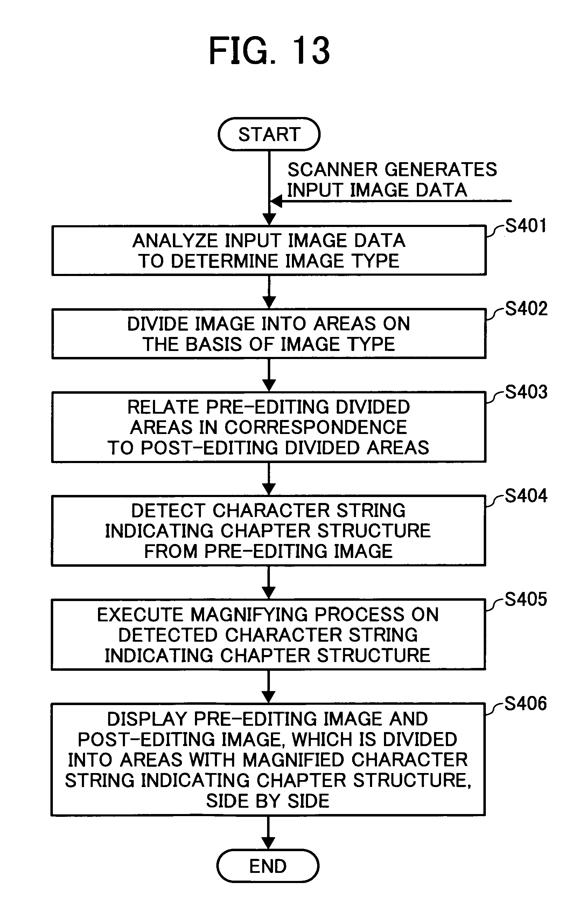

Fig. 13 is a flowchart for explaining an image display procedure according to the fourth embodiment. Steps S401 to S403 are the same as steps S101 to S103 in the image display procedure according to the first embodiment (Fig. 5), so that the additional description of steps S401 to S403 is omitted.

The character detecting unit 27 detects a character string image, which is a string of characters indicating a chapter structure, from a pre-editing image (step S404). In Fig. 12, the character string image indicating each chapter structure is detected as the heading.

The editing unit 24 executes a magnifying process on the detected character string image indicating the chapter structure (step S405). The display control unit 26 displays a pre-editing image and a post-edited image, which includes the chapter-structure-indicating character string processed and magnified by the editing unit 24, in a row (side by side)step S406).

In this manner, the image display device displays a character image representing the heading or the initial string of characters of each image component in a magnified state in a post-edited image when displaying the image reflecting an editing setting result on the touch panel 3. When each image component is displayed in a small size to make it difficult for a user to see the contents of the image component, therefore, the user can facilitate the visual recognition of the corresponding relation between each image component and of the order in arrangement of each image component before/after editing by using the magnified character string image as a crew.

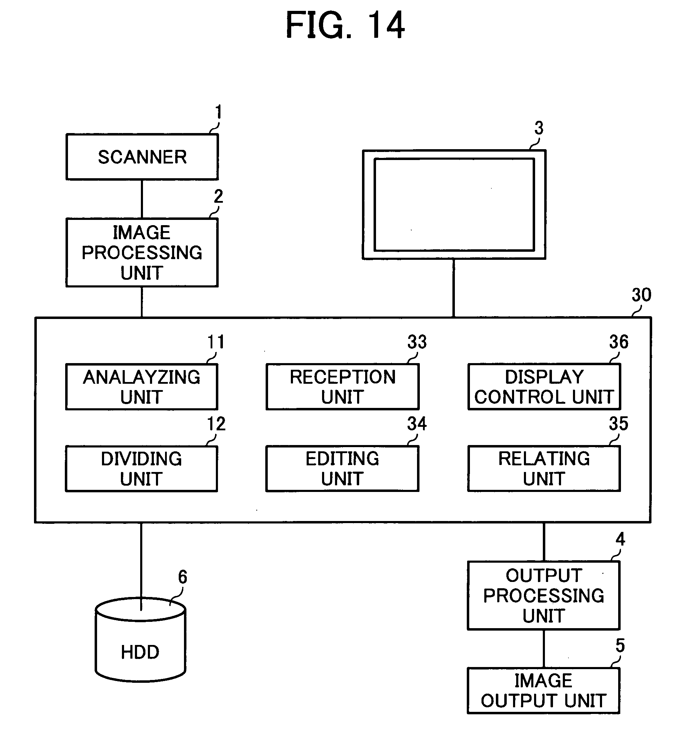

Fig. 14 is a block diagram of an image forming device including an image display device according to a fifth embodiment of the present invention. An image display device 30 of the fifth embodiment is different from the image display device of the first embodiment in a point. The different point is that the when a post-edited divided area is erased from a post-edited image as a result of touch input of an erasing request, which is made as an editing process, from a pre-editing divided area displayed on the touch panel, the display device 30 stores the erased post-edited divided area in the memory, and restores the erased post-edited divided area to display it on the touch panel by rearranging the post-edited divided area in the location from which it is erased when the display device 30 receives a request for restoring an erased portion.

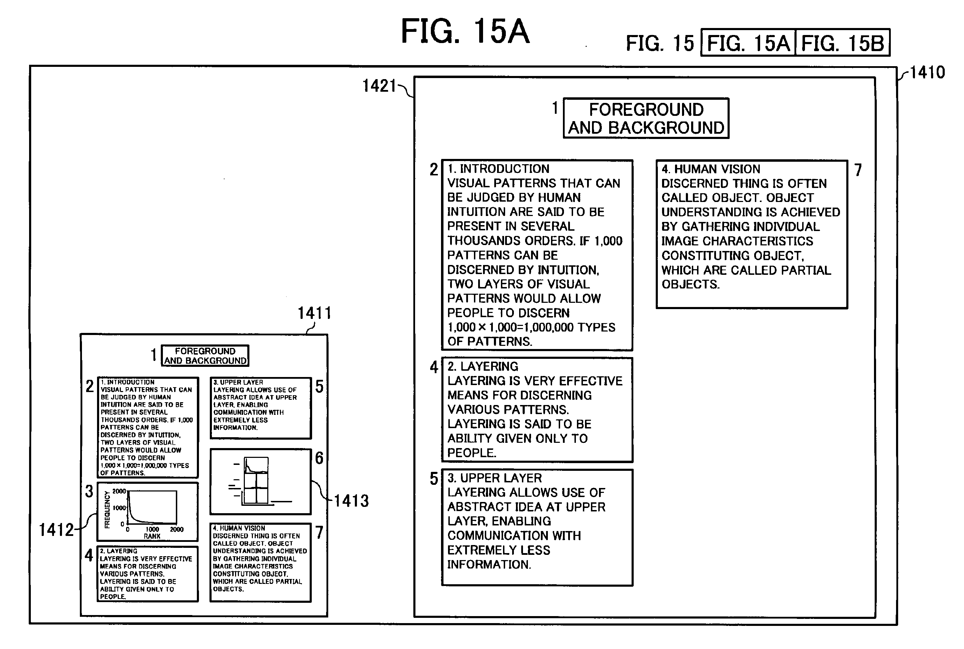

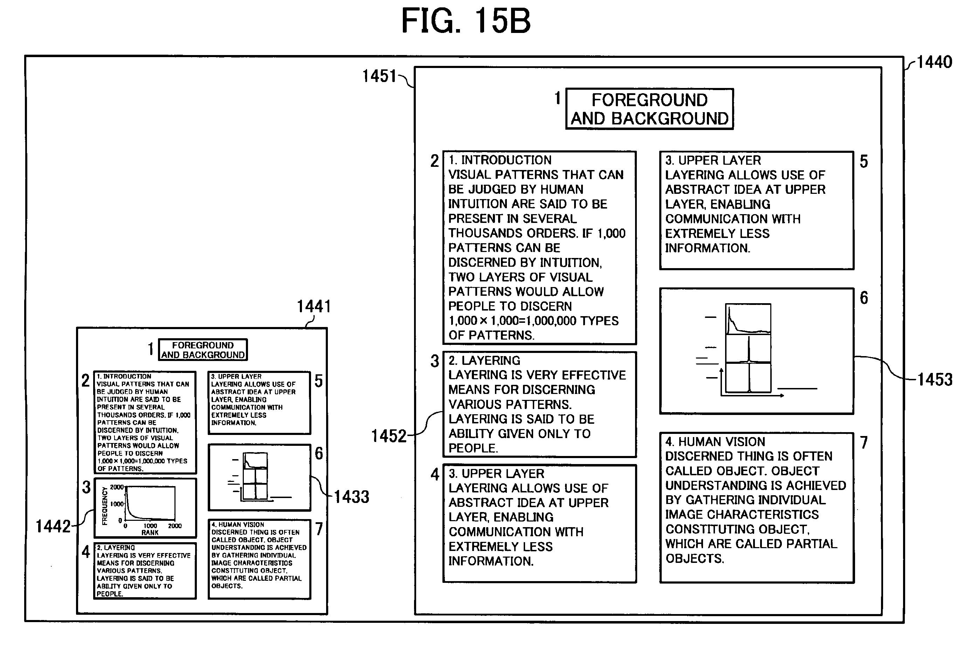

Fig. 15 is schematic view for explaining one example of display by the image display device according to the fifth embodiment. When divided areas 1412, 1413 in a pre-editing image 1411 are touched on the touch panel 3 to be erased, a post-edited image 1421 is displayed. On the screen 1410 of the touch panel 3, comparing identification numbers 1 to 7 for identifying image components before/after editing reveals that the erased divided areas are the divided areas identified by identification numbers 3, 6.

For example, the item of deletion is selected from the pull-down menu developed by touch input on the touch panel 3, and an erasing process is executed. Subsequently, an editing unit 34 checks image data of the divided areas subjected to the erasing process in the memory (HDD) 6. Then, the pull-down menu is developed again from the divided areas 1412, 1413 in the pre-editing image, and the cancel of the erasing process is entered from the pull-down menu. Responding to this, the editing unit 34 reads the erased image data of the divided areas out of the memory 6 to edit image components. A display control unit 36 displays the image components edited in restoration on the post-edited image on the touch panel 3.

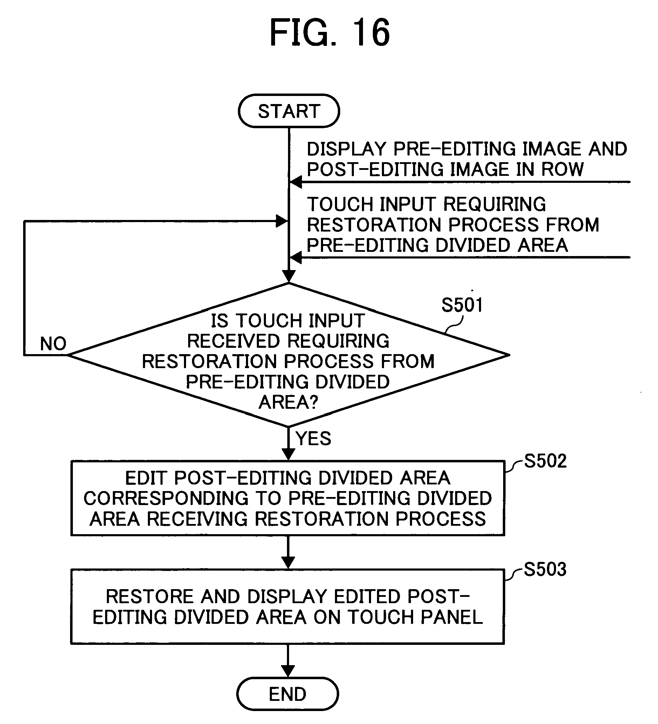

Fig. 16 is a flowchart for explaining an image display procedure according to the fifth embodiment. A pre-editing image and a post-edited image are displayed in a row on the touch panel 3. A reception unit 33 detects reception or non-reception of touch input requiring a restoration process from a pre-editing area (step S501).

When the reception unit 33 detects reception of touch input as a user makes the touch input requiring the restoration process from the pre-editing area (Yes at step S501), the editing unit 34 reads from the HDD 6 the image data of the post-edited divided area that is related in correspondence to the pre-editing divided area by a relating unit 35, and execute an editing process on the post-edited divided area image data (step S502). The display control unit 36 displays the post-edited divided area edited by the editing unit 34 in a restored form in the post-edited image on the touch panel 3 (step S503).

As described above, according to the image display device of the fifth embodiment, the editing unit 34 restores and edits a divided area once erased by the editing process when input requiring the restoration of the erased divided area is made from a pre-editing image on the touch panel 3. The display control unit 36 then displays the restored divide area in a restored state in a post-edited image. The image display device, therefore, has a fail safe function of easily restoring a mistakenly erased image area.

An image display device of a sixth embodiment is different from the image display device of the first embodiment in a point. The different point is that when a pre-editing divided area is erased as a result of touch input of an erasing request, which is made as an editing process, from the pre-editing divided area displayed on the touch panel, the erased pre-editing divided area is separately displayed with other divided areas in a row in an auxiliary manner on the touch panel.

Touch input is made from the erased divided area displayed in an auxiliary manner to execute a restoration process to restore and display the erased divided area at the location from which the divided area is erased in a post-edited image.

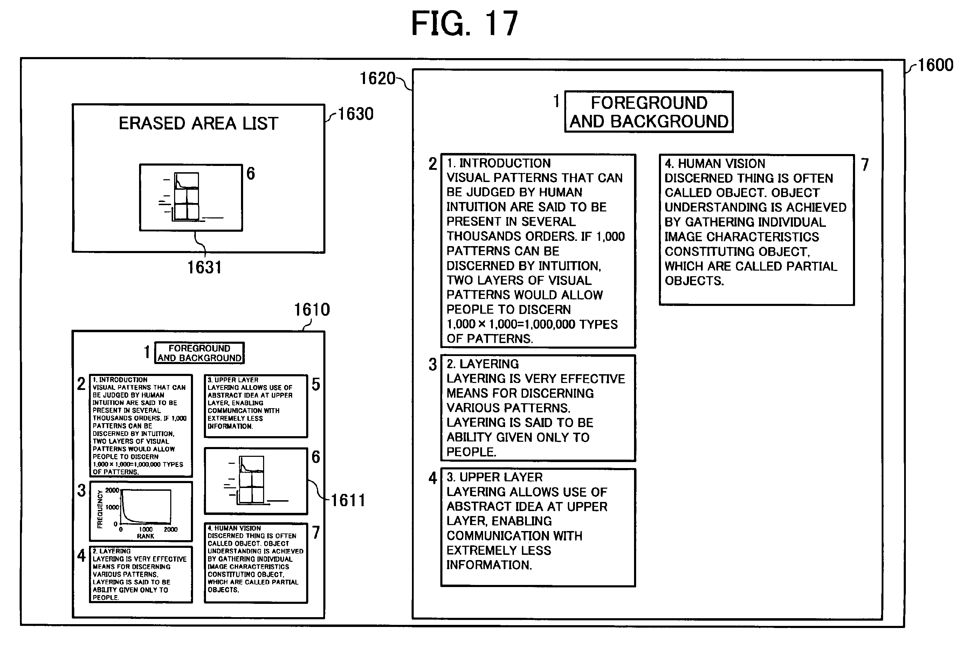

Fig. 17 is a schematic view for explaining one example of display by an image display device according to a sixth embodiment of the present invention. A divided area 1611 displayed on the touch panel 3 is subjected to an deletion process through touch input from the divided area 1611, and the editing unit 34 generates post-edited image data, then the display control unit 36 displays a post-edited image 1620 on the touch panel 3. The divided area corresponding to the divided area 1611, which is already erased, is not displayed on the post-edited image 1620.

In Fig. 17, the divide area 1611 having undergone the deletion process is displayed as a divided area 1631 in an erased area list 1630. When a restoration process is executed on the divided area 1631 displayed in the erased area list 1630 through touch input, the divided area 1631 is subjected to an editing process for restoration, and is displayed in the post-edited image on the touch panel 3 (e.g. displayed in the same manner as a post-edited image 1451 in Fig. 15). The operation of restoration and display here is the same as explained in the fifth embodiment, so that a further explanation is omitted.

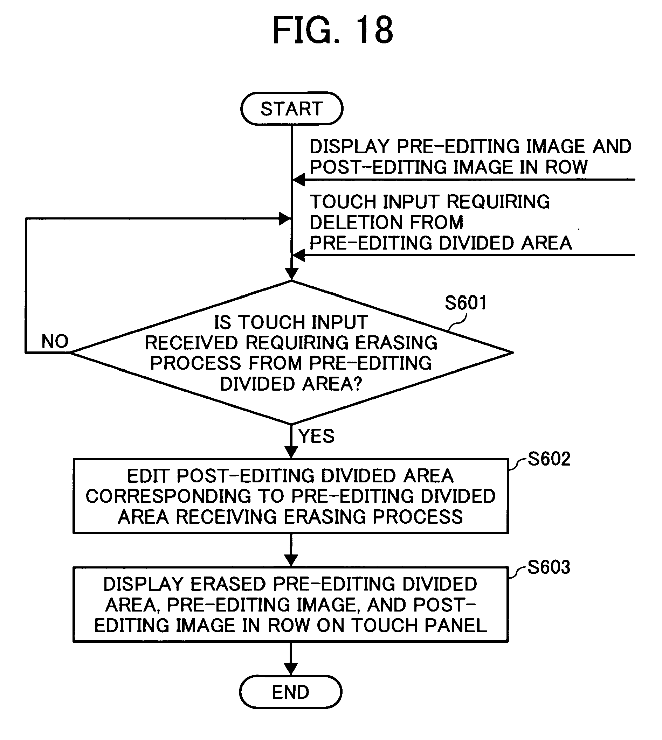

Fig. 18 is a flowchart for explaining an image display procedure according to the sixth embodiment. A pre-editing image and a post-edited image are displayed in a row on the touch panel 3. A user makes touch input of deletion requirement from a pre-editing divided area. The reception unit 23 judges on whether it has received the touch input requiring a deletion process from the pre-editing divided area (step S601). When the reception unit 23 has received the touch input requiring the deletion process (Yes at step 601), the editing unit 24 edits an erased image for the deletion list (equivalent to the divided area 1631 in Fig. 16) that corresponds to the pre-editing divided area receiving the deletion process (step S602), or reads out image data of the already erased pre-editing divided area when the image data has been stored in the HDD 6 (not shown).

The display control unit 26 lines up the erased pre-editing divided area included in the deletion list, the pre-editing image, and the post-edited image, and display them together on the touch panel 3 (step S603).

In this manner, the image display device separately displays a pre-editing divided area, which is erased by the editing process from pre-editing divided areas displayed on the touch panel, on the touch panel in an auxiliary manner. This allows easy visual recognition of an erased part.

Through touch input from the erased divided area on auxiliary display, the restoration process is executed to restore the erased divided area, which is then displayed in a restored form in a post-edited image on the touch panel. This provides the image display device with the fail safe function.

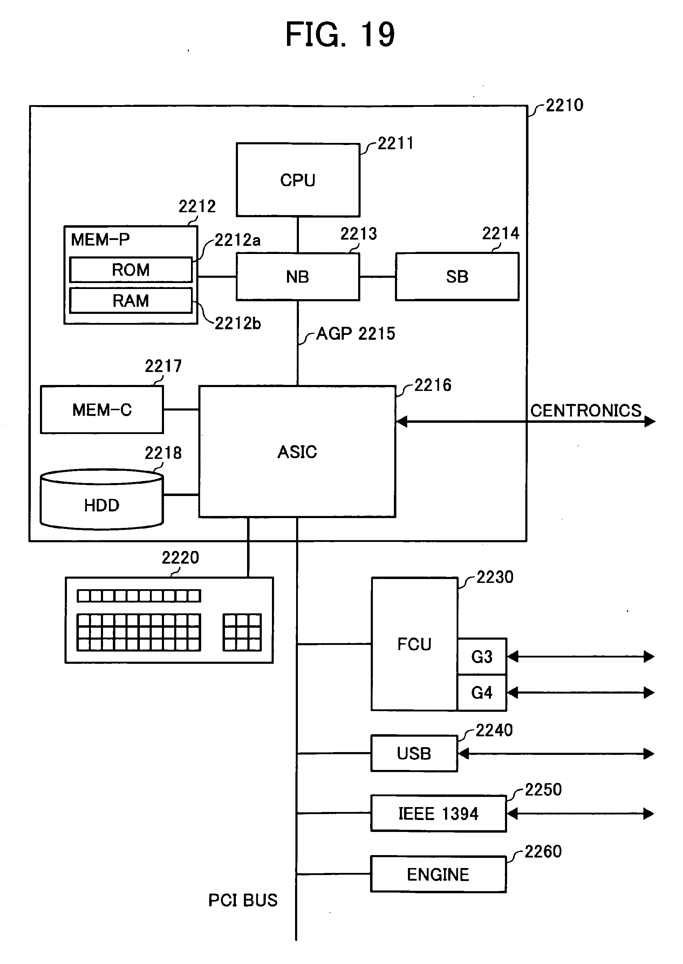

Fig. 19 is a block diagram of the hardware configuration of the image forming device according to the embodiments. The image forming device is constructed as a compound machine (MFP) having multiple functions of faxing, scanning, etc. As shown in Fig. 19, the MFP includes a controller 2210, and an engine unit 2260, which are interconnected via a PCI (Peripheral Component Interconnect) bus. The controller 2210 executes overall control over the MFP, image display control, image processing control, other various types of control, etc., controlling input from an FCUI/F (Field Communication Unit Interface) 2230 and an operating display unit 2220. The engine unit 2260 is an image processing engine, etc. connectible to the PCI bus, and includes, for example, an image processing portion executing error diffusion or gamma conversion on obtained image data.

The controller 2210 has a CPU 2211, a north bridge (NB) 2213, a system memory (MEM-P) 2212, a south bridge (SB) 2214, a local memory (MEM-C) 2217, an ASIC (Application Specific Integrated Circuit) 2216, and a hard disc drive 2218. The NB 2213 is connected to the ASIC 2216 via an AGP (Accelerated Graphics Port) bus 2215. The MEM-P 2212 has a ROM (Read Only Memory) 2212a, and a RAM (Random Access Memory) 2212b.

The CPU 2211 executes general control over the MFP, and has a chip set composed of the NB 2213, the MEM-P 2212, and the SB 2214. The CPU 2211 is connected to other units via the chip set.

The NB 2213 is a bridge that connects the CPU 2211 to the MEM-P 2212, to the SB 2214, and to the AGP BUS 2215. The NB 2213 has a memory controller controlling reading/writing on the MEM-P 2212, a PCI master, and an AGP target.

The MEM-P 2212 is a system memory used as a storage memory for programs and data, a developing memory for programs and data, etc. The MEM-P 2212 consists of the ROM 2212a, and the RAM 2212b. The ROM 2212a is a read-only memory used as a storage memory for programs and data. The RAM 2212b is a readable/writable memory used as a developing memory for programs and data, a graphic memory for image processing, etc.

The SB 2214 is a bridge that connects the NB 2213 to PCI devices and peripheral devices. The SB 2214 is connected to the NB 2213 via the PCI bus, to which the FCUI/F 2230 is connected.

The ASIC 2216 is an IC (Integrated Circuit) for use in multimedia image processing, and has a hardware element for multimedia image processing. The ASIC 2216 plays a role as a bridge that interconnects the AGP BUS 2215, the PCI bus, the HDD 2218, and the MEM-C 2217.

The ASIC 2216 includes a PCI target, an AGP master, an arbiter (ARB) constituting the kernel of the ASIC 2216, a memory controller that controls the MEM-C 2217, and a plurality of DMACs (Direct Memory Access Controller) that rotate image data using a hardware logic, etc. The ASIC 2216 is connected to an USB (Universal Serial Bus) 2240, and to an IEEE (the Institute of Electrical and Electronics Engineers) 1394 interface 2250 via the PCI bus between the ASIC 2216 and the engine unit 2260.

The MEM-C 2217 is a local memory used as a transmission image buffer and as a code buffer. The HDD 2218 is a storage that accumulates image data, programs, font data, and forms.

The AGP bus 2215 is a bus interface for a graphic accelerator card that is proposed to speed up graphic processes. The AGP bus 2215 provides direct access to the MEM-P 2212 at high throughput to allow high-speed performance of the graphic accelerator card.

The operation display unit (touch panel 3) 2220 connected to the ASIC 2216 receives operational input from an operator, and sends received operational input information to the ASIC 2216.

An image displaying program and an image forming program executed by the MFP of the embodiments are preinstalled in the ROM, etc., and are provided for execution.

The image displaying program and image forming program executed by the MFP of the embodiments may be recorded on a computer-readable recording medium, such as CR-ROM, flexible disc (FD), CD-R, or DVD (Digital Versatile Disc), as a file in an installable format or an executable format, and be provided for execution.

The image displaying program and image forming program executed by the MFP of the embodiments may be stored in a computer connected to a network, such the Internet, and be downloaded via the network for execution. The image displaying program and image forming program executed by the MFP of the embodiments may be provided or distributed via a network, such as the Internet.

The image displaying program and image forming program executed by the MFP of the embodiments is of a module structure that includes each unit described above (analyzing unit 11, the dividing unit 12, the reception unit 13, the editing unit 14, the relating unit 15, the display control unit 26, the character detecting unit 27, etc.) In an actual hardware configuration, the CPU (processor) reads the image displaying program and image forming program out of the ROM and executes the programs to load each unit into the main memory, where the analyzing unit 11, the dividing unit 12, the reception unit 13, the editing unit 14, the relating unit 15, the display control unit 26, the character detecting unit 27, etc. are generated.

### Another example of display on Touch Panel

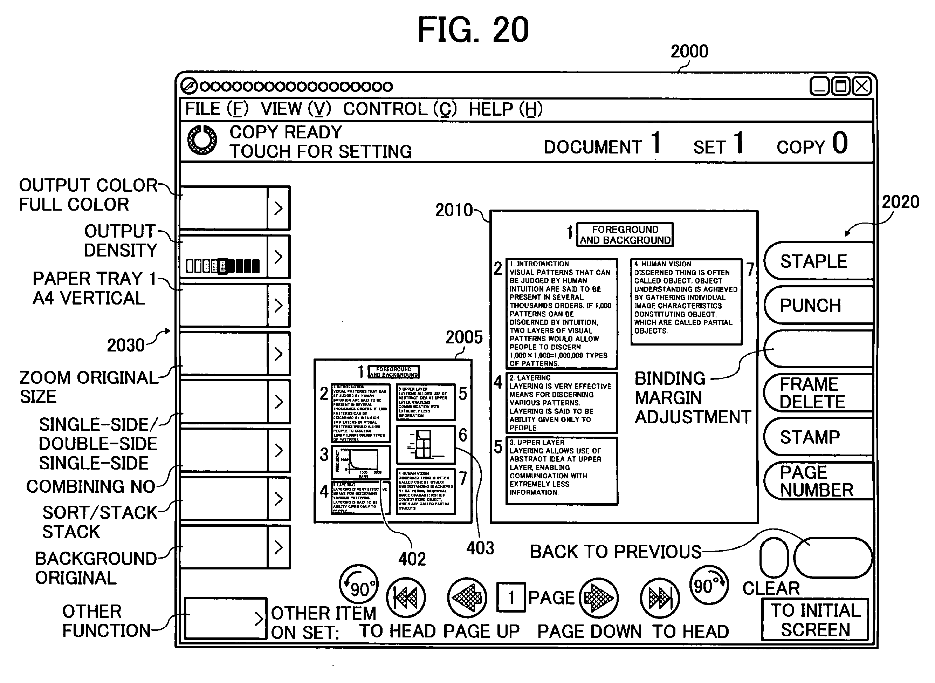

Fig. 20 is a schematic view of another example of a display screen displayed on the touch panel of the image display device. A preview image 2005, a process subject image (expected finished image) 2010, function setting items 2020 and 2030 are displayed on a display screen 2000 of the touch panel 3.

A menu 2020, or the function setting items (menu items) 2020, is displayed at the right on the display screen 2000. The menu 2020 is made up of menu items of staple, punch, binding margin adjustment, frame deletion, stamp, page number, etc., execution of which depends on a place on the process subject images (expected finished images) 2010. A menu 2030, or the function setting items (menu items) 2030, is displayed at the left on the display screen 2000. The menu 2030 is made up of menu items of output color, output thickness, paper, maginification/demagnification, single-side/double-side, condensation, sort/stack, skin, etc., execution of which does not depend on image contents.

As described in the first embodiment, the display control unit 16 generates the expected finished image 2010 by executing an image process, a print process, and a post-process on the preview image 2005, which is an input image displayed in a preview form, on the basis of setting information provided by contact input from the touch panel. The display control unit 16 then displays the generated expected finished image 2010 on the touch panel 3. Displaying/controlling such images arranged in a row has been described so far.

As shown in Fig. 20, the image display device 10 displays the preview image 2005 and the post-edited image (expected finished image) 2010 in a row, and presents the function setting items 2020, which allows setting operation according to a specified place on the display screen, and the menu 2030 not depending on image contents. This improves operability in carrying out setting operation through various function setting items and print-out setting operation for the preview image 2005 and the expected finished image 2010.

An image display device of a seventh embodiment is different from the image display device of the first embodiment in the point that the image display device of the seventh embodiment is provided in the form of a personal computer (PC). For example, a printer driver is installed in the PC, and an image to be printed out is displayed on the monitor screen of the PC. Image data is divided into areas through contact input from the monitor screen or through input using a mouse and a pointer. The divided image data is subjected to an editing process to display a post-edited image, and a finished image is printed out in response to a received print-out command from a user.

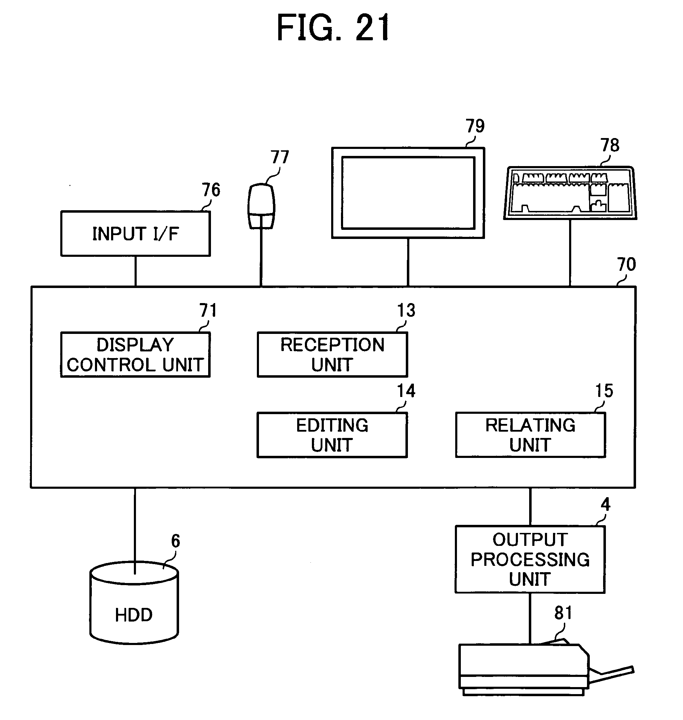

Fig. 21 is a block diagram of a PC according to a seventh embodiment of the present invention. The PC includes an image display unit 70, an input interface (I/F) 76, a mouse 77, a keyboard 78, the HDD 6, a monitor 79, and an output processing unit 4. The output processing unit 4 executes an image output process, and has an interface function. Various output devices can be connected to the output processing unit 4. As one example of such output devices, a printer 81 is connected to the output processing unit 4 in this embodiment. In Fig. 21, the same symbols as used in the embodiments described so far denote the same components executing the same functions as described in the embodiments. In the following, the description will mainly be devoted to the components denoted by different symbols.

The image display unit 70 has a display control unit 71, the reception unit 13, the editing unit 14, and the relating unit 15. The display control unit 71 executes a display control function as a CPU (not shown) incorporated into the PC reads a display control program out of the HDD 6 and develops the program on a RAM (not shown).

The input I/F 76 inputs data written in the PDL (Page Description Language). The PDL language records the data by classifying it into text data, graphic data, image data, such as bit map data, etc. This eliminates a need of analyzing a data attribute, such as text and image, for each component area. The display control unit 71, therefore, can read each data attribute and the area for the data attribute by directly reading a description given by the PDL language.

For example, when the display control unit 71 receives PDL data:
"72 72 moveto
/Times-Bolditalic 24 selectfront
(Taro Yamada)
show
showpaqge",
the display control unit 71 reads this character string written in the PDL language to comprehend the meaning that Times Bold Italic Font 24 is selected from the position (72, 72) and "Taro Yamada" is displayed.

In another instance, when receiving PDL data:
"newpath
144 72 moveto
144 432 lineto
stroke
showpage",
the display control unit 71 reads this character string written in the PDL language to comprehend the meaning that a straight line from the point (144, 72) to the point (144, 432) is drawn to be displayed.

When the image display device applies to a PC, therefore, no analyzing unit is necessary, contrary to the fact that the image forming device described so far has the analyzing unit that analyzes the attribute of each area from image data. The image display device of the seventh embodiment applying to the PC reads image data written in the PDL language to execute area division for each attribute far easier than the image display device of the other embodiments does.

The display control unit 71 thus divides image data into each area for each data attribute by reading the data written in the PDL language, and displays the divided areas on the monitor 79. A user is allowed to input a command from the divided areas displayed on the monitor 79 via such an input device as the mouse 77 and the keyboard 78.

The reception unit 13 receives input by the input device, the editing unit 14 edits image data according to editing command input received by the reception unit 13, the relating unit 15 relates pre-editing divided areas in correspondence to post-edited divided areas, and the display control unit 71 displays a preview image and a post-edited image in a row. This series of processes are the same as the processes described in the embodiments.

When post-edited data is displayed on the monitor 79 and the output processing unit 4 receives a print-out command from a user via the input device, a driver program causes the printer 81 to execute a print-out process on the displayed post-edited data, thus the printer 81 prints out a finished image in the form of the displayed post-edited data.

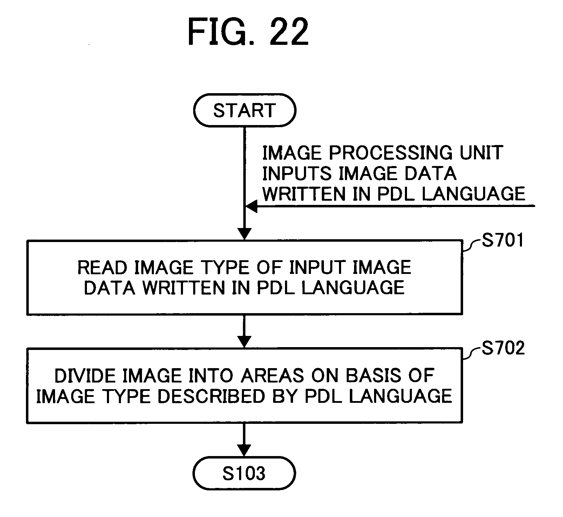

Fig. 22 is a flowchart for explaining an image process procedure according to the seventh embodiment. The display control unit 71 receives input of image data written in the PDL language, and reads the image type of the input image data according to the description by the PDL language (step S701). The display control unit 71 then divides the image into areas on the basis of the image type described by the PDL language (step S702). The procedure flow ensuing step S702 is the same as step S103 in the first embodiment, meaning that each function of the relating unit 15, the reception unit 13, and the editing unit 14, etc. is the same as described in the first embodiment, thus no further explanation of the function is given.

### Another Display Example on Monitor Screen of PC

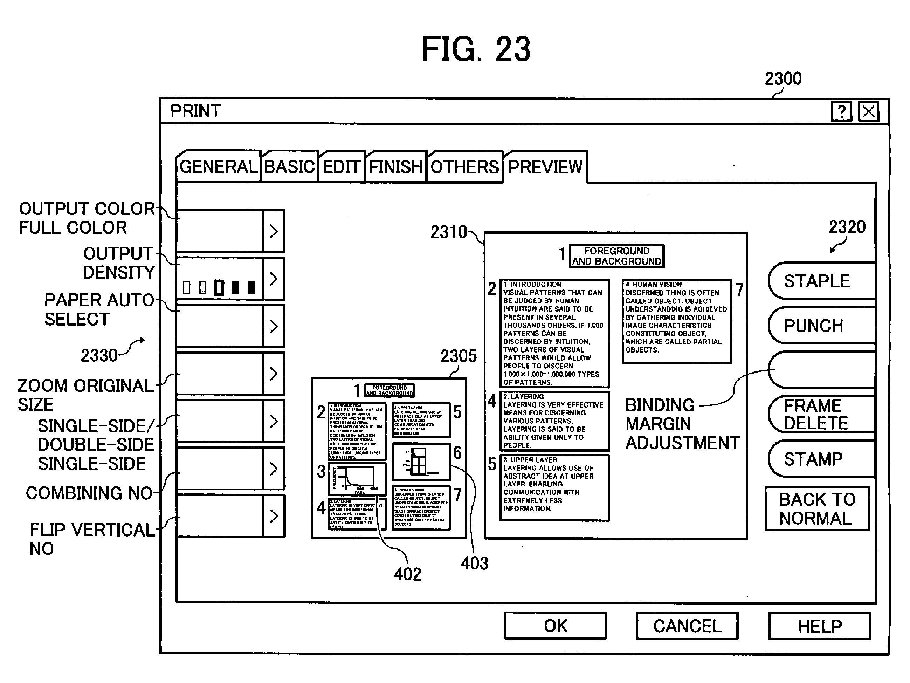

Fig. 23 is a schematic view of one example of a display screen displayed on the monitor of the PC. A preview image 2305, a process subject image (expected finished image) 2310, function setting items 2320 and 2330 are displayed on a display screen 2300 on the monitor 79.

A menu 2320, or the function setting items (menu items) 2320, is displayed at the right on the screen 2300. The menu 2320 is made up of menu items of staple, punch, binding margin adjustment, frame deletion, stamp, etc., execution of which depends on a place on the process subject images (expected finished images) 2310. A menu 2330, or the function setting items (menu items) 2330, is displayed at the left on the screen 2300. The menu 2330 is made up of menu items of output color, output thickness, paper, magnification/demagnification, single-side/double-side, condensation, sort/stack, skin, etc., execution of which does not depend on image contents.

The display control unit 71 generates the expected finished image 2310 by executing an image process, a print process, and a post-process on the preview image 2305, which is an input image displayed in a preview form, on the basis of setting information input via the mouse 77 and the keyboard 78. The display control unit 71 then displays the generated expected finished image 2310 on the monitor 79. Displaying/controlling such images arranged in a row has been described so far.

As shown in Fig. 23, the PC displays the preview image 2305 and the post-edited image (expected finished image) 2310 in a row on the monitor 79, and presents the function setting items 2320, which allows setting operation according to a specified place on the display screen, and the menu 2330 not depending on image contents. This improves operability in carrying out setting operation through various function setting items and print-out setting operation for the preview image 2305 and expected finished image 2310.

As described above, the PC performing as the image display device according to the seventh embodiment reads data attribute for each area from a description by the PDL language upon receiving data written in the PDL language, divides the data into each area for each attribute, and displays divided areas on the monitor. A displayed divided area is specified and is subjected to an editing process, and then a screen image having undergone the editing process is displayed on the monitor and is subsequently printed out by the printer driver. The PC, therefore, makes full use of the advantage of a PDL language description to carry out efficient display, editing, post-edited display, and print processing.

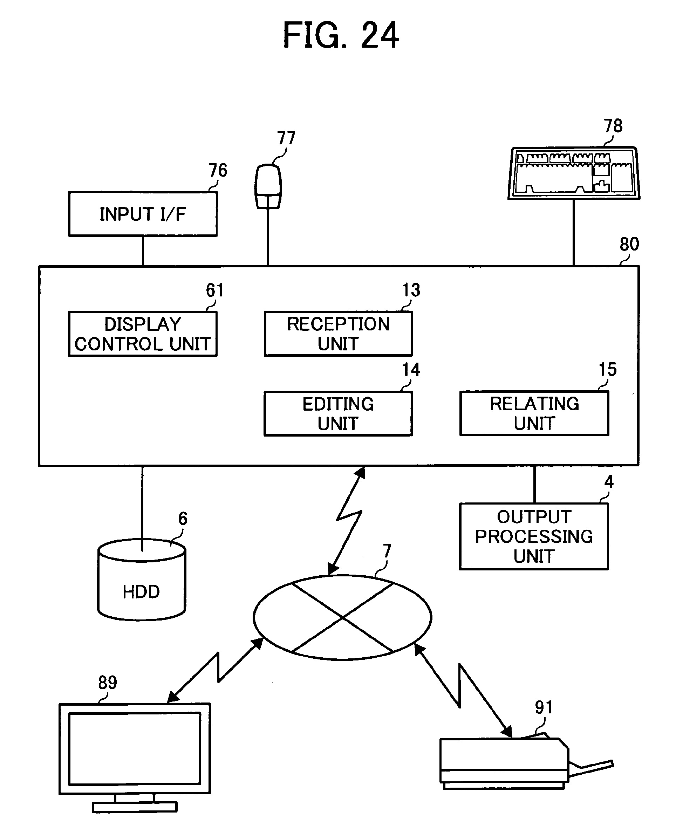

Fig. 24 is a block diagram of an image display system according to an eighth embodiment of the present invention. The image display system according to the eight embodiment includes a monitor 89 that displays image data, a printer 91 that prints out, and a personal computer (PC) 80 that causes the monitor 89 to display the image data and the printer 91 to print out an image. The printer 91, the monitor 89, and the PC 80 are interconnected via a network 7.

The PC 80 includes a display control unit 61 that divides image data into areas on the basis of the image type of the image data to display the divided image data on the monitor 89, the reception unit 13 that receives editing setting on a divided area displayed on the monitor 89, and the editing unit 14 that executes an editing process on the displayed divided area on the basis of the editing setting received by the reception unit 13. The display control unit 61 displays a pre-editing image before undergoing the editing process and a post-edited image having undergone the editing process on the monitor 89, and causes the printer 91 to print out the displayed post-edited image.

The image display system according to the eighth embodiment is provided by connecting the monitor 79 and the printer 81 of the seventh embodiment to the PC via the network 7. The system of the eighth embodiment offers the same functions as the PC of the seventh embodiment in display and print-out operation, and has the only structural difference that the monitor and printer are connected to the PC via the network 7. The detailed description of the image display system, therefore, will be omitted. The image display system of the eighth embodiment is provided by giving the image display device of the seventh embodiment a system configuration via a network.

While the embodiments according to the present invention have been described as the embodiments relates to the image forming device and PC, the scope of the present invention is not limited to the above embodiments and modifications. The present invention is applicable to equipment having an image display function, which include electronic equipment, such as a cellular phone and digital camera, and information processors, such as a PC.

The embodiments and modifications described above are merely explanatory examples. The specific examples described herein, therefore, is not intended to limit the true scope of the present invention.

According to an aspect of the present invention, an image display device divides image data into areas to display the divided areas on a display unit, receives editing setting to execute an editing process on a displayed divided area, and displays a post-edited image also on the display unit. The image display device facilitates visual comparison between an input image and a post-edited image.

According to another aspect of the present invention, the image display device analyzes input image data to determine the image type of the image data, divides the image data into areas on the basis of the determined image type, and causes an operating display unit to display the image data divided into the areas. The image display device receives editing setting from a displayed divided area, executes an editing process on a pre-editing divided area on the basis of the editing setting, and causes the operation display unit to display a pre-editing image before undergoing the editing process and a post-edited image having undergone the editing process. Thus, according to such an operational constitution, the image display device divides image data into areas according to the image type of the image data, receives editing setting input from a displayed divided area, and displays a post-edited image together with a pre-editing image in a row. The image display device facilitates visual comparison between an input image and a post-edited image having undergone a process based on editing setting.

The display unit has the operating display unit capable of receiving operation input. When input image data is written in the PDL (Page Description Language) language, a display control unit analyzes image data to determine the image type of the image data referring to the PDL language, divides the image data into areas, and causes the operation display unit to display the image data divided into the areas. The display control unit then receives editing setting from a displayed divided area, executes an editing process on a pre-editing divided area on the basis of the editing setting, and causes the operation display unit to display a pre-editing image before undergoing the editing process and a post-edited image having undergone the editing process. Thus, according to such an operational constitution, the image display device divides image data into areas according to image type of the image data, receives editing setting input from a displayed divided area, and displays a post-edited image together with a pre-editing image in a row. The image display device facilitates visual comparison between an input image and a post-edited image having undergone a process based on editing setting.

According to still another aspect of the present invention, the operating display unit allows display using a cursor or pointer, receiving input via a mouse, keyboard, and physical contact. The image display device facilitates visual comparison between an input image and a post-edited image having undergone a process based on editing setting by a simple operation.

According to more over aspect of the present invention, the image display device relates post-edited divided areas in correspondence to pre-editing divided areas, and displays both areas related in correspondence to each other on the operating display unit. According to such an operational constitution, the image display device displays both pre-editing divided areas and post-edited divided areas in a mutually corresponding relation. The image display device facilitates visual comparison between an input image and a post-edited image having undergone a process based on editing setting.

According to further more aspect of the present invention, the image display device displays identification information in the vicinity of each of pre-editing divided areas and post-edited divided areas put in a mutually corresponding relation, the identification information corresponding to each of the pre-editing divided areas and post-edited divided areas. This operational constitution offers an effect of providing the image display device that relates input image visually in correspondence to a post-edited image having undergone a process based on editing setting to facilitate visual comparison between both images.

According to more over aspect of the present invention, the image display device receives editing setting made by input from a post-edited divided area displayed on the operating display unit, and displays the pre-editing divided area corresponding to the input-receiving post-edited divided area in at least any one of state of magnification, highlighting, color change, and blinking. According to such an operational constitution, the image display device allows a user to execute input from a post-edited image to easily check the pre-editing image corresponding to the post-edited image. The image display device relates input image visually and conspicuously in correspondence to a post-edited image having undergone a process based on editing setting to facilitate visual comparison between both images.

According to further more aspect of the present invention, the image display device receives editing setting made by input from a pre-editing divided area displayed on the operating display unit, and displays the post-edited divided area corresponding to the input-receiving pre-editing divided area in at least any one of state of magnification, highlighting, color change, and blinking. According to such an operational constitution, the image display device allows a user to execute input from a pre-editing image to easily check the post-edited image corresponding to the pre-editing image. The the image display device relates input image visually and conspicuously in correspondence to a post-edited image having undergone a process based on editing setting to facilitate visual comparison between both images.

According to more over aspect of the present invention, when a post-edited divided area corresponding to an input-receiving pre-editing divided area is erased by an editing process, the image display device causes the operation display unit to display information indicating the deletion of the post-edited divided area. According to such an operational constitution, the image display device displays information indicating the deletion of a pre-editing image when the pre-editing image has been erased even if input is made from the pre-editing image. The image display device calls a user's attention to an erased image that cannot be put out.

According to further more aspect of the present invention, the image display device detects a given character image out of character images in a pre-editing divided area, and causes the operating display unit to display the given character image corresponding to the detected character image in the corresponding pre-editing divided area in at least any one of state of magnification, highlighting, color change, and blinking. According to such an operational constitution, the image display device displays given characters from a pre-editing image in an easily observable manner in the post-edited image corresponding to the pre-editing image. The image display device allows effective check on a post-edited image even if a display area is small.

According to more over aspect of the present invention, an image display device divides image data into areas to display the divided areas on a display unit, receives editing setting to execute an editing process on a displayed divided area, and displays a post-edited image also on the display unit. The image display method facilitates visual comparison between an input image and a post-edited image.

According to further more aspect of the present invention, a program is provided to cause a computer to execute the image display method above-mentioned.

According to more over aspect of the present invention, an image display system can be configured including such image display device mentioned above.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An image display device (10) comprising:
a display unit (3) that displays an image;
a display control unit (16) that divides an original image data into at least one block and causes the display unit (3) to display a non-edited image of a portion of the original image corresponding to an image data of the block;
a receiving unit (13) that receives an editing setting corresponding to the non-edited image; and
an editing unit (14) that edits the image data of the block based on the editing setting to obtain an edited image data, wherein
the display control unit (16) causes the display unit (3) to display an edited image corresponding to the edited image data side by side of the non-edited image.

2. An image display device (10) according to claim 1, wherein
the display unit (3) includes an operation display unit (3) that receives an operational input as the editing setting,
the display control unit (16) includes
an analyzing unit (11) that analyzes the original image data to determine a type of the image data, the type of the image data being any one of a character image, photograph image, graphic image, and other image; and
a dividing unit (12) that divides the original image data into the block based on the type of the image determined by the analyzing unit (11), the display control unit (16) causing the operation display unit (3) to display the image data of the block, and
the receiving unit (13) receives the editing setting via the non-edited image displayed on the operation display unit (3), the editing setting including at least one of a setting for deletion, shift, magnification, and demagnification.

3. An image display device (70) according to claim 1, wherein
the display unit (71) includes an operation display unit (71) that receives an operational input as the editing setting,
the display control unit (71) analyzes the original image data to determine a type of the image, the type of the image being any one of character image, photograph image, graphic image, and other images based on a Page Description Language, and divides the original image data into the block based on the type of the image, the display control unit (71) causing the operation display unit (79) to display the image data of the block, and
the receiving unit (13) receives the editing setting via the non-edited image displayed on the operation display unit (3), the editing setting including at least one of a setting for deletion, shift, magnification, and demagnification.

4. An image display device (10) according to claim 2, wherein
the operation display unit (3) displays at least one of a cursor and a pointer, and
the receiving unit (13) receives an input made by at least one of a mouse, a keyboard, and a physical contact.

5. An image display device (10) according to claim 2, further comprising a relating unit (15) that relates the edited image to the non-edited image, wherein
the display control unit (16) causes the operation display unit (3) to display the edited image and the non-edited image in a manner being related by the relating unit (15).

6. An image display device (70) according to claim 3, further comprising a relating unit (15) that relates the edited image to the non-edited image, wherein
the display control unit (71) causes the operation display unit (79) to display the edited image and the non-edited image in a manner being related by the relating unit (15).

7. An image display device (10) according to claim 5, wherein the display control unit (16) displays an identification information near each of the edited image and the non-edited image, the identification information representing a corresponding relation between the edited image and the non-edited image related by the relating unit (15).

8. An image display device (10) according to claim 5, wherein
the receiving unit (13) receives the editing setting via the edited image, and
the display control unit (16) causes the operation display unit (3) to display the non-edited image, related to the corresponding edited image by the relating unit (15), to be in at least any one of states of magnification, highlighting, color change, and blinking.

9. An image display device (10) according to claim 5, wherein
the receiving unit (13) receives the editing setting via the non-edited image, and
the display control unit (16) causes the operation display unit (3) to display the edited image, related to the non-edited image by the relating unit (15), to be in at least any one of states of magnification, highlighting, color change, and blinking.

10. An image display device (10) according to claim 9, wherein the display control unit (16) causes the operation display unit (3) to display a deletion information that indicates the edited image has been deleted thereon, the edited image being related to the non-edited image that receives the input of the editing setting to be deleted.

11. An image display device (10) according to claim 2, further comprising a character detecting unit (27) that detects a given character image out of the block, wherein
the display control unit (16) causes the operation display unit (3) to display the detected given character image in the edited image, corresponding to the non-edited image, in at least any one of states of magnification, highlighting, color change, and blinking.

12. An image display method comprising:
dividing an original image data into at least one block;
displaying a non-edited image of the block on a display unit (3);
receiving an editing setting via the non-edited image displayed on the display unit (3);
editing the image data of the block based on the editing setting to obtain an edited image data; and
displaying an edited image corresponding to the edited image data, the edited image and the non-edited image being displayed side by side on the display unit (3).

13. An image display method according to claim 12, further comprising analyzing the original image data to determine a type of the image, the type of the image being any one of character image, photograph image, graphic image, and other images, wherein
the dividing includes dividing the original image data based on the type of the image determined at the analyzing,
the displaying includes displaying the non-edited image on an operation display unit (3), and
the receiving includes receiving the editing setting via the non-edited image displayed on the operation display unit (3), the editing setting including at least one of a setting for deletion, shift, magnification, and demagnification.

14. An image display method according to claim 12, further comprising analyzing the original image data to determine a type of the image, the type of the image being any one of character image, photograph image, graphic image, and other images, wherein
the dividing includes dividing the original image data based on the type of the image determined at the analyzing,
the displaying includes displaying the non-edited image on an operation display unit (79), and
the receiving includes receiving the editing setting via the non-edited image displayed on the operation display unit (79), the editing setting including at least one of a setting for deletion, shift, magnification, and demagnification.

15. An image display method according to claim 13, further comprising
the displaying includes displaying at least one of a cursor and a pointer, and
receiving includes receiving an input made by at least one of a mouse, a keyboard, and a physical contact.

16. An image display method according to claim 13, further comprising relating the edited image to the non-edited image, wherein
the displaying includes displaying the edited image and the non-edited image in a manner being related at the relating.

17. An image display method according to claim 14, further comprising relating the edited image to the non-edited image, wherein
the displaying includes displaying the edited image and the non-edited image in a manner being related at the relating.

18. An image display method according to claim 16, further comprising
displaying an identification information near each of the edited image and the non-edited image, the identification information representing a relation between the edited image and the non-edited image related at the relating.

19. An image display method according to claim 16, wherein
the receiving includes receiving the editing setting via the edited image, and
the displaying includes displaying the non-edited image, related to the edited image, to be in at least one of states of magnification, highlighting, color change, and blinking.

20. An image display method according to claim 16, wherein
the receiving includes receiving the editing setting via the non-edited image, and
the displaying includes displaying the edited image, related to the non-edited image, to be in at least one of states of magnification, highlighting, color change, and blinking.

21. An image display method according to claim 20, further comprising displaying a deletion information that indicates the edited image has been deleted thereon, the edited image being related to the non-edited image that received the editing setting to be deleted.

22. An image display method according to claim 13, further comprising detecting a given character image out of the block, and
displaying the detected given character image in the edited image, corresponding to the non-edited image, in at least one of states of magnification, highlighting, color change, and blinking.

23. A computer program product comprising a computer usable medium having computer readable program codes embodied in the medium that when executed causes a computer to:
dividing an original image data into at least one block;
displaying a non-edited image of the block on a display unit (3);
receiving an editing setting via the non-edited image displayed on the display unit (3);
editing the image data of the block based on the editing setting to obtain an edited image data; and
displaying an edited image corresponding to the edited image data, the edited image and the non-edited image being displayed side on the display unit (3).

24. An image display system comprising:
a display device (89) that displays an original image;
an image output device 91 that outputs an image; and
an image processor (80) that causes the display device (89) to display the image, and causes the output device to output the image, in which the display device (89), the image output device and the image processor are interconnected via a network, the image processor including
a display control unit (16) that divides the original image data into at least one block and causes the display device (89) to display a non-edited image of a portion of the original image corresponding to an image data of the block;
a receiving unit (13) that receives an editing setting corresponding to the non-edited image; and
an editing unit (14) that edits the image data of the block based on the editing setting to obtain an edited image data, wherein
the display control unit (16) causes the display unit (3) to display an edited image corresponding to the edited image data side by side of the non-edited image.
